# EUROPEAN PATENT APPLICATION

(11) **EP 1 199 816 A1**
(43) Date of publication of application: **24.04.2002**
(21) Application number: 00944256.7
(22) Date of filing: 05.07.2000
(51) Int. Cl.: H04B 7/04, H04B 1/74

(54) **RADIO BASE STATION AND METHOD OF PREVENTING FAILURE OF RADIO FUNCTION**

(30) Priority: 05.07.1999 JP 19103499
(71) Applicant: NEC Corporation, Minato-ku, Tokyo 108-8001 (JP)
(72) Inventor: TSUJI, Kazushi, Minato-ku, Tokyo 108-8001 (JP)
(74) Representative: Glawe, Delfs, Moll & Partner
(86) International application number: JP0004459
(87) International publication number: WO0103331

(57) **Abstract**

It is an object to provide a radio base station apparatus for preventing a receiving function in one sector from being interrupted even if one radio unit is damaged and to provide a method for effectively preventing the radio function from being interrupted. According to the present invention, the radio base station apparatus includes a mobile communication radio base station having a plurality of radio unit and each radio units includes a receiving unit in one sector connected to an antenna in another sector.

## Description

### Technical Field

The present invention relates to a radio base station apparatus for mobile communication and a method for preventing a radio function from being interrupted.

### Background Art

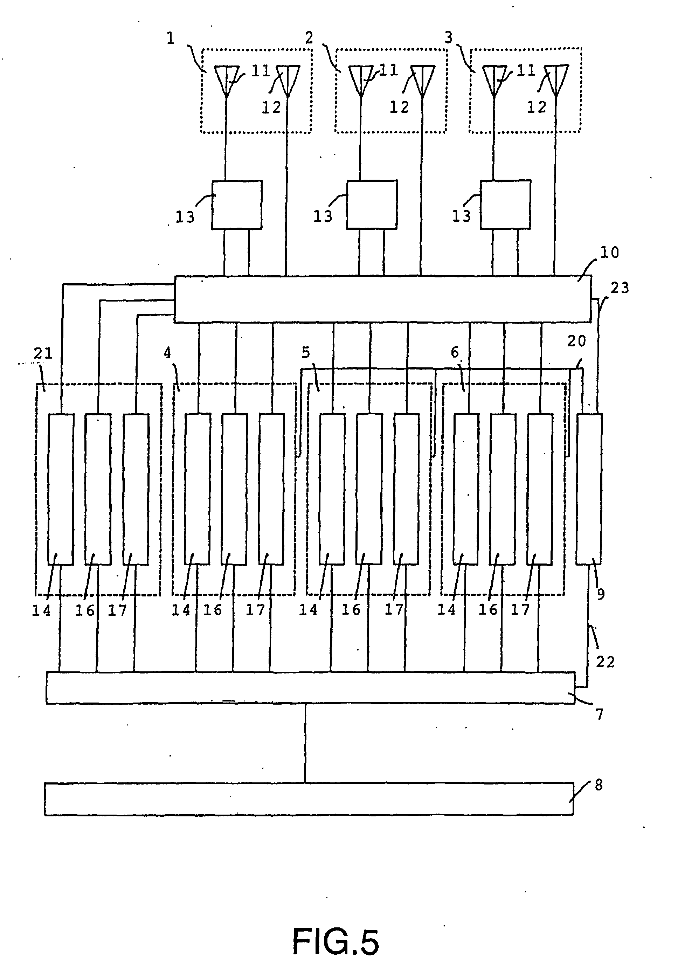

A conventional radio base station apparatus will be described with reference to Fig. 5. Fig. 5 shows a conventional radio base station apparatus having a diversity reception function for covering a service area having three sectors. The conventional radio base station apparatus comprises a first diversity antenna unit 1 being directed towards a first sector, a second diversity antenna unit 2 being directed towards a second sector, a third diversity antenna unit 3 being directed towards a third sector, a first radio unit 4, a second radio unit 5, a third radio unit 6, a baseband processing unit 7, a wiring interface unit 8, a control unit 9, a radio switching unit 10, and a back-up radio unit 21. Each of the first to third diversity antenna units 1 to 3 comprises a receiving and transmitting antenna 11, a receiving antenna 12, and antenna sharing equipment 13. Each of the first to third radio units 4 to 6 comprise a transmitting unit 14, a first receiving unit 16, and a second receiving unit 17. A back-up radio unit 31 comprises a transmitting unit 14, a first receiving unit 16, and a second receiving unit 17.

During normal operation of the conventional radio base station apparatus, the radio switching unit 10 causes the first diversity antenna unit 1 to be connected to the first radio unit 4, the second diversity antenna unit 2 to be connected to the second radio unit 5, and the third diversity antenna unit 3 to be connected to the third radio unit 6.

When one of the first to third ratio units 4 to 6 is damaged, the control unit 9 detects a fault signal 20 and outputs a radio switching signal 23 to the radio switching unit 10. Simultaneously, the radio unit 9 outputs fault information 22 to the baseband signal processing unit 7. The radio switching unit 10 receives the radio switching signal 23 from the control unit 9, then causes the damaged radio unit to be disconnected from the diversity antenna corresponding thereto, and performs a switching operation so as to connect the back-up system radio unit 21 to the diversity antenna corresponding to the damaged radio unit. The baseband signal processing unit 7 receives the fault information 22, then transmits a transmission baseband signal to the first radio unit 4, and performs a switching operation so as to be connected to the back-up system radio unit 21. Further, the baseband signal processing unit 7 sets a received baseband signal which is outputted from the first radio unit 4, to be invalid, and also sets a received baseband signal from the back-up system radio unit 21 to be valid.

However, the conventional radio base station has the following problems. That is, if the radio functions are not distributed but are concentrated, the risk of the radio function becoming interrupted due to damage is increased. Thus, the back-up system function is necessary to maintain the radio function and thus, a compact radio base station apparatus with reduced costs cannot be obtained.

Further, when the radio functions are distributed so as to prevent the radio function from being interrupted in the event of a fault, loss due to distribution of the functions is caused. Thus, a compact radio base station apparatus cannot be obtained at low costs.

Therefore, it is an object of the present invention to provide a compact radio base station apparatus having no back-up system for lower costs, by concentrating the radio unit functions and by using a diversity function.

### Disclosure of Invention

According to Claim 1, a radio base station apparatus comprises a mobile communication radio base station having a diversity reception function, the radio base station comprises a plurality of radio units, and each of the plurality of radio units comprises a receiving unit in one sector, which is connected to an antenna in another sector.

According to Claim 2, in the radio base station apparatus, the mobile communication radio base station further comprises a control unit for detecting fault information of the plurality of radio units, and a baseband signal processing unit for specifying the radio unit which is damaged, based on a signal from the control unit, and for stopping a received signal from the receiving unit in the damaged radio unit.

According to Claim 3, in the radio base station apparatus, the radio unit comprises a plurality of transmitting units.

According to Claim 4, in the radio base station apparatus, the receiving unit in the one sector is connected to the antenna in the other sector via antenna sharing equipment.

According to Claim 5, in the radio base station apparatus, the receiving unit and the antenna, which are connected via the antenna sharing equipment, are further connected via a divider.

According to Claim 6, in the radio base station apparatus, the transmitting unit is connected to the antenna via a mixer and antenna sharing equipment.

According to Claim 7, the radio base station apparatus further comprises a plurality of the baseband signal processing units.

According to Claim 8, a method for preventing a radio function from being interrupted when a communication fault is caused in a mobile communication radio base station having a diversity reception function, comprises the steps of detecting a fault signal from a functional unit for covering one of a plurality of sectors, transmitting a fault notifying signal to a baseband signal processing unit based on the detected fault signal, and invalidating an output signal from a receiving unit in the functional unit in which the fault is caused, based on the fault notifying signal.

According to Claim 9, a method for preventing a radio function from being interrupted, when a communication fault is caused in a mobile communication radio base station having a diversity reception function, comprises the steps of detecting a fault signal from a multicarrier-type functional unit for covering one of a plurality of sectors, transmitting a fault notifying signal to a baseband signal processing unit based on the detected fault signal, and invalidating an output signal from a receiving unit in the functional unit in which the fault is caused, based on the fault notifying signal.

### Brief Description of the Drawings

Fig. 1 is a block diagram showing the structure of a base station apparatus according to a first embodiment of the present invention;
Fig. 2 is a block diagram showing the structure of a base station apparatus according to a second embodiment of the present invention;
Fig. 3 is a block diagram showing the structure of a base station apparatus according to a third embodiment of the preset invention;
Fig. 4 is a block diagram showing the structure of a base station apparatus according to a fourth embodiment of the present invention;
Fig. 5 is a block diagram showing the structure of a conventional base station apparatus; and
Fig. 6 is a flowchart of a method for preventing a radio function from being interrupted in the present invention.

### Best Mode for Embodying the Invention

In a radio base station apparatus for mobile communication of the present invention, interruption of the radio function can be prevented without using a back-up antenna, wiring between mobile communication radio base station apparatuses, and a dedicated back-up radio unit.

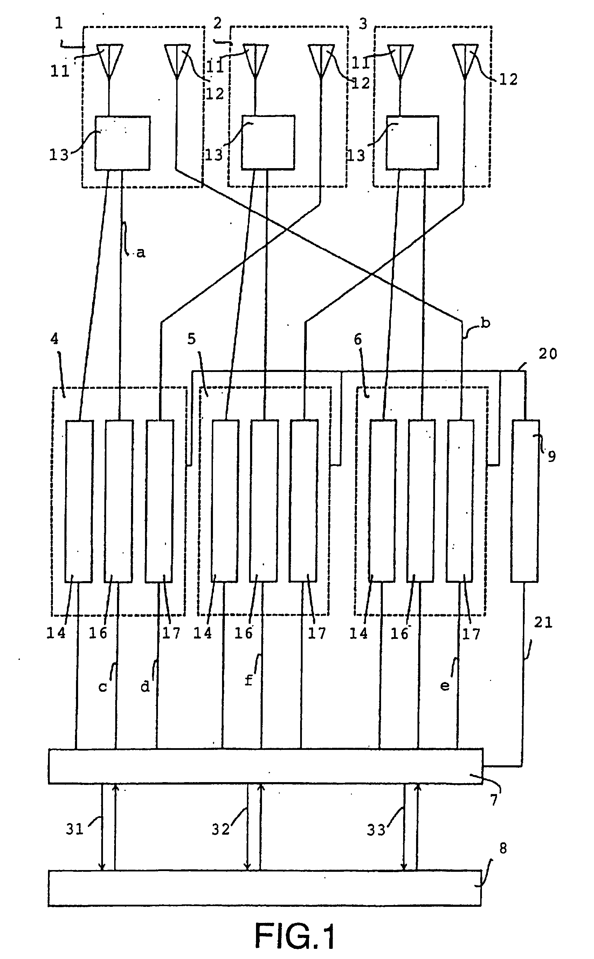

Referring to Fig. 1, in the radio base station apparatus of the present invention, dual-band receiving units in one radio unit are connected to antennas in different sectors. Consequently, even if the radio unit is damaged, the interruption of a receiving function in a single sector can be prevented.

The radio base station apparatus of the present invention does not need a back-up receiving unit and a switching-function unit for switching a damaged receiving unit and the back-up receiving unit.

As mentioned above, in the radio base station apparatus of the present invention, since the receiving units in the radio unit are connected to the antennas in the different sectors, neither a back-up radio unit nor wiring means needs be provided. Even if the radio unit is damaged, the receiving function in a single sector can be maintained.

Fig. 1 shows a radio unit in a CDMA (Code Division Multiple Access) system radio base station apparatus according to a first embodiment of the present invention. Referring to Fig. 1, the radio unit has a diversity reception function for covering a service area having three sectors. Although the number of sectors is three according to the first embodiment, it is not limited to this. That is, the number of sectors is not limited to three and may be plural in the present invention.

As shown in Fig. 1, the radio base station apparatus of the present invention comprises a first diversity antenna unit 1 being directed towards a first sector, a second diversity antenna unit 2 being directed towards a second sector, a third diversity antenna unit 3 being directed towards a third sector, a first radio unit 4, a second radio unit 5, and a third radio unit 6. Preferably, the radio base station apparatus may further comprise a baseband processing unit 7, a wiring interface unit 8, and a control unit 9.

The first to third diversity antenna units (hereinafter, simply referred to as "antenna units") 1 to 3 have the same structure and, therefore, only the first antenna unit 1 will be described hereinbelow. The second and third antenna units 2 and 3 are the same as the first antenna unit 1.

The first diversity antenna unit 1 comprises a receiving and transmitting antenna 11, a receiving antenna 12, and antenna sharing equipment 13. The first antenna unit 1 is directed towards first sector. The receiving and transmitting antenna 11 in the first antenna unit is connected to the antenna sharing equipment 13, and receives and transmits signals from/to mobile equipment (not shown) in the sector 1.

The antenna sharing equipment 13 is connected to the transmitting unit 14 and the receiving unit 16 in the first radio unit 4, separates a received signal from the receiving and transmitting antenna 11, and outputs a radio transmission signal from the transmitting unit 14 to the receiving and transmitting antenna 11. The receiving antenna 12 in the first antenna unit 1 is connected to a receiving unit 17 in the third receiving unit 6, and outputs a radio received signal. Since the first to third radio units 4 to 6 have the same structure, hereinbelow, only the structure of the first radio unit 4 will be described. The second and third radio units 5 and 6 have the same structure as that of the first radio unit 4 and a description thereof is thus omitted. Operations of the second and third radio units 5 and 6 are the same as those of the first radio unit 4. However, the directivities of the first to third antenna units 1 to 3 in the sectors are all different, as mentioned above.

As shown in Fig. 1, the first radio unit 4 comprises the transmitting unit 14, the receiving unit 16, and the receiving unit 17. In other words, the first radio unit 4 is a functional unit comprising the transmitting unit 14, the receiving unit 16, and the receiving unit 17. The transmitting unit 14 in the first radio unit 4 inputs a signal outputted from the baseband signal processing unit 7, converts a transmission baseband signal for the mobile equipment in the first sector into a radio transmission signal, and outputs the converted signal to the antenna sharing equipment 13 in the first antenna unit 1. The receiving units 16 and the receiving unit 17 in the first radio unit 4 have the same function. The radio received signal is inputted to the receiving unit 16 in the first radio unit 4 from the first antenna unit 1 and a received baseband signal, which is converted into a digital signal, is outputted to the baseband signal processing unit 7. The radio received signal is inputted to the receiving unit 17 in the first radio unit 4 from the second antenna unit 2 and the digital signal is outputted to the baseband signal processing unit 7.

The received baseband signal is inputted to the baseband signal processing unit 7 through the receiving units 16 and 17 in the first to third radio units 4 to 6, and received data is outputted to the wiring interface unit 8.

The transmission data is inputted to the baseband signal processing unit 7 from the wiring interface unit 8 and the transmission baseband signal is outputted to the mobile equipment in each sector and to the transmitting units 14 in the first to third radio units 4 to 6. The wiring interface unit 8 is connected to a host device (not shown) and the baseband signal processing unit 7.

The control unit 9 is connected to each functional unit (radio unit), and detects fault information of each radio unit and outputs the detected fault information to the baseband signal processing unit 7. In other words, according to the first embodiment, each of the first to third radio units 4 to 6 has a single functional unit, a defect can be detected in each of the first to third radio units 4 to 6 having the single functional unit, and the individual replacement thereof is possible.

The structure of the radio base station apparatus has been described according to the first embodiment. However, the structures of the receiving and transmitting antenna and the receiving antenna, the structure of the receiving unit, the structures of the baseband signal processing circuit and the control unit, as shown in Fig. 1, and the performance of the antenna sharing equipment may be well-known. Therefore, a detailed description is omitted. Incidentally, the first embodiment uses an FDD (Frequency Division Duplex) system radio base station apparatus.

Further, in a TDD (Time Division Duplex) system radio base station apparatus, as a different system, in place of the antenna sharing equipment, antenna switching equipment can be used.

Hereinbelow, a description is given of a receiving operation of received data 31 in the first sector and received data 32 in the second sector. A description of the operation of the transmitting units in the radio units and received data 33 in the third sector is omitted.

First, the normal operation of the first radio unit 4 and third radio unit 6 will be described. Radio received signals a and b, which are received at the first antenna unit, are converted into received baseband signals c and e by the receiving units 16 and 17 in the first radio unit 4 and the third radio unit 6, respectively. The baseband signal processing unit 7 rediffuses the received baseband signals c and e, which are outputted from the receiving units 16 and 17 in the first radio unit 4 and the third radio unit 6, and diversity-combines the diffused signals. After that, the baseband signal processing unit 7 outputs received data g in the first sector to the wiring interface unit 8. The wiring interface unit 8 converts the received data 31 in the first sector, the received data 32 in the second sector, and the received data 33 in the third sector into wiring data, and outputs the converted wiring data to the host device (not shown).

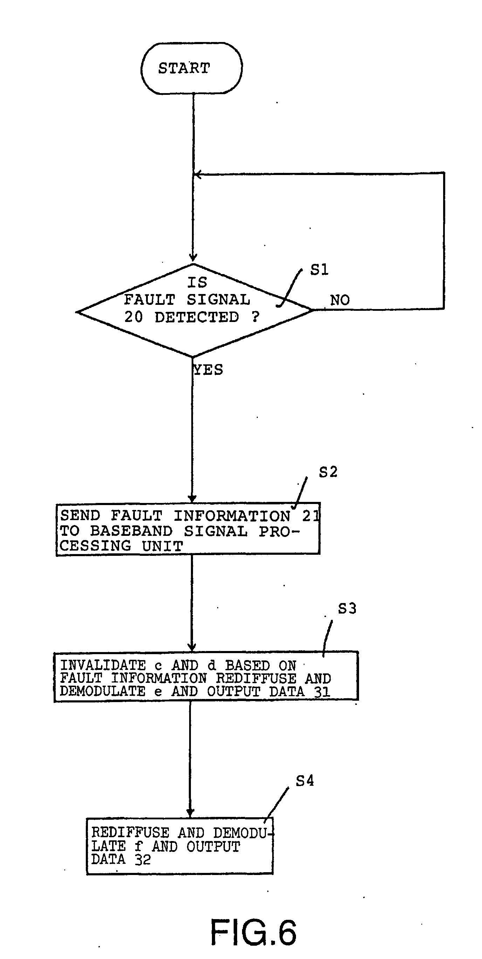

Next, a description is given of the operation of the radio base station apparatus when the first radio unit 4 is damaged, with reference to a flowchart of Fig. 6. The control unit 9 detects whether or not there is the fault signal 20 of the radio unit 4 (step S1). If the fault signal 20 is detected, fault information 21 is sent to the baseband signal processing unit 7 (step S2). If the fault signal 20 is not detected, the apparatus enters a standby mode. The fault signal 20 uses, e.g., a signal indicating an out-of-synchronization state of a synthesizer unit for frequency conversion in the first radio unit 4, as a detection signal for the occurrence of a fault. The baseband signal processing unit 7 sets the received baseband signals c and d from the receiving units 16 and 17 in the first radio unit 4 to invalid, based on the fault information 21. Further, the baseband signal processing unit 7 rediffuses and demodulates only the received baseband signal e from the receiving unit 17 in the third radio unit 6, which is not damaged, and outputs the received data 31 in the first sector (step S3). The baseband signal processing unit 7 rediffuses and demodulates only a baseband signal f from the receiving unit 16 in the second radio unit 5, and outputs the received data 32 in the second sector (step S4).

According to the first embodiment, although the number of sectors is three, there may be many. In the radio base station apparatus having a plurality of diversity functions in the present invention, the second receiving unit shown in Fig. 1 is connected to an antenna in another antenna unit having a receiving and transmitting function in another sector. For example, as shown in Fig. 1, the second receiving unit 17 in the first sector is connected to the antenna 12 in the antenna unit in the second sector. Incidentally, the antenna in the "other" antenna may use any of the antennas in the plurality of antenna units. Preferably, the connection between the second receiving unit in one radio unit and the antenna in the other antenna unit may be formed by only one combination therebetween. That is, in Fig. 1, the second receiving unit in the first radio unit (in the leftmost block in Fig. 1) is one of the receiving antenna 12 in the second antenna unit 2 and the receiving antenna 12 in the third antenna unit 3. As a consequence of this combination, the second receiving unit 17 in the second radio unit (in the intermediate block in Fig. 1) is connected to the receiving antenna 12 in the first antenna unit 1. As mentioned above, in the radio base station apparatus of the present invention, the number of sectors is not limited and there may be many. In the radio base station apparatus having a plurality of sectors, the second receiving unit 17 is connected to the antenna in the other antenna unit which is uniquely selected. Incidentally, the antenna in the antenna unit, which is connected to the second receiving unit, the second transmitting unit, etc., in the following second to fourth embodiments is similar to the foregoing.

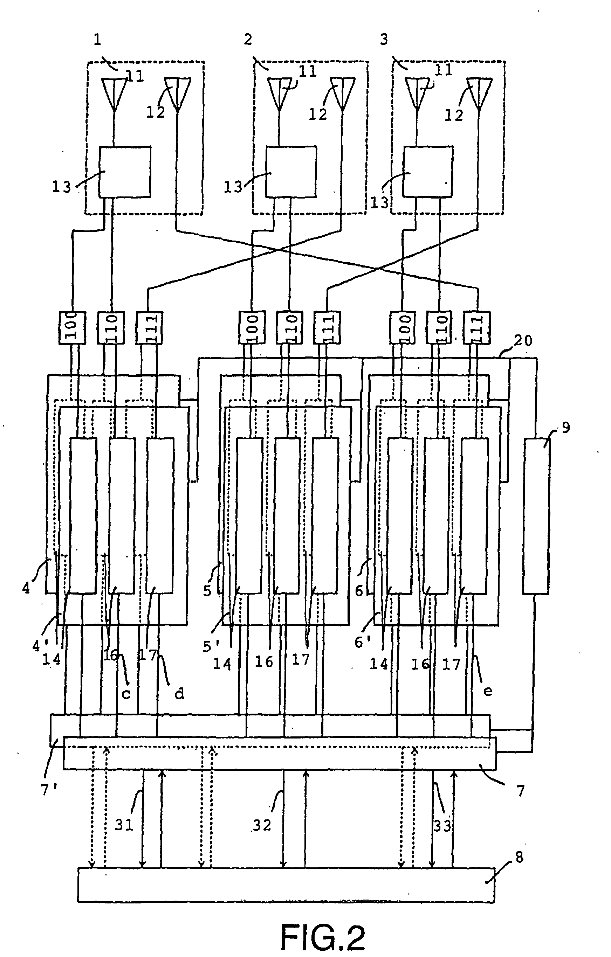

Next, a second embodiment of the present invention will be described. According to the second embodiment, a multicarrier-type radio base station apparatus is adopted. Fig. 2 shows the structure of the multicarrier-type radio base station apparatus according to the second embodiment.

As shown in Fig. 2, according to the second embodiment, antennas similar to those in Fig. 1 according to the first embodiment are used, and the number of sectors is not limited, similarly to the first embodiment.

Referring to Fig. 2, according to the second embodiment, each antenna unit is connected to each corresponding radio unit, similarly to those according to the first embodiment.

As mentioned above, the first antenna unit 1 comprises a receiving and transmitting unit 11, the receiving antenna 12, and the antenna sharing equipment 13. The first antenna unit 1 is the same as that according to the first embodiment. The transmitting antenna 11 in the first antenna unit, being directed towards the first sector is connected to the antenna sharing equipment 13, and receives and transmits signals.

According to the second embodiment, the antenna sharing equipment 13 in each sector is connected to the transmitting unit 14 in the first radio unit 4 via a mixer 100. The antenna sharing equipment 13 in each sector is connected to the first receiving unit 16 via a first divider 110. The antenna sharing equipment 13 in each sector separates the received signal from the receiving and transmitting antenna 11. The receiving and transmitting antenna 11 in the antenna sharing equipment 13 outputs a radio transmission signal from the transmitting unit 14. Similarly to the first embodiment, the receiving antenna 12 in the other antenna unit (in the second sector) is connected to the second receiving unit 17 in the first radio unit 4 via a second divider 111. The receiving antenna 12 outputs a radio received signal. The mixer 100 and the first and second dividers 110 and 111 are electrically connected to the radio unit (functional unit), as shown in Fig. 2.

According to the second embodiment, the structure of the radio base station apparatus is the same as that according to the first embodiment, excluding the above description. The first to third radio units 4 to 6 are the same as those according to the first embodiment. Therefore, a description of other portions is omitted. Although the number of carriers is two according to the second embodiment, it may be three or more. In this case, the number of the mixer 100 and the numbers of the first and second dividers 110 and 111 can be appropriately increased or a divider and a mixer of a multicarrier type, such as a (three-or-more)-carrier type, e.g., a (three-carrier)-type divider and a (three-carrier)-type mixer, can be suitably used.

According to the second embodiment, ass mentioned above, similarly to the first embodiment, the number of sectors is not limited and can be appropriately selected. Further, the response and operation are similar to those according to the first embodiment, when the first radio unit or the like is damaged.

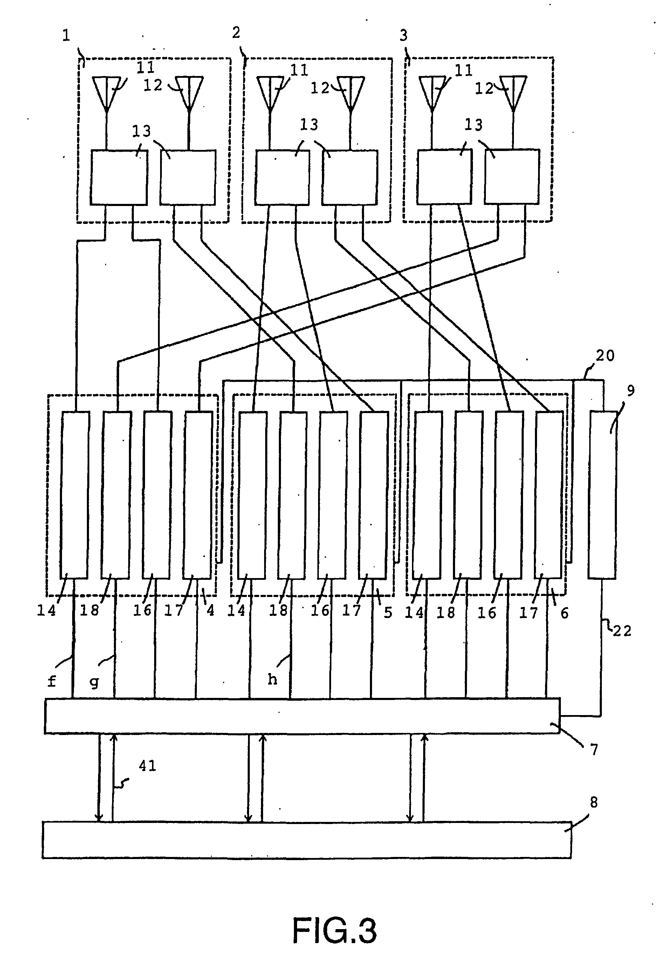

Next, a third embodiment of the present invention will be described. According to the third embodiment, a transmitting system in the apparatus, having a diversity transmission function, is further improved. Fig. 3 shows the structure of a radio base station apparatus according to the third embodiment. According to the third embodiment, the first radio unit 4, the second radio unit 5, and the third radio unit 6 have the same structure as those of the first embodiment. Each of the first to third radio units 4 to 6 comprises a first transmitting unit 14, a second transmitting unit 18, a first receiving unit 15, and a second receiving unit 16.

According to the third embodiment, a first antenna unit 1, a second antenna unit 2, and a third antenna unit 3 have the same structure. However, two receiving and transmitting antennas 11 and 12 in each of the first to third antenna units 1 to 3 are connected to two pieces of antenna equipment 13.

When the first radio unit 4 having the above-mentioned structure is damaged, a control unit 9 detects the fault signal 20 in the first radio unit 4 and notifies a baseband signal processing unit 7 of the fault information 22. Operations of the received data are similar to those according to the first embodiment, as shown in Figs. 1 and 6. The control unit 9 sets transmission baseband signals, which are transmitted to the first and second transmitting units 14 and 18 in the first radio unit 4, to be invalid. Therefore, transmission data 41 in the first sector is converted into the radio transmission signal by the second transmitting unit 18 in the second radio unit 5 and, thereafter, the converted radio transmission signal is outputted to the receiving and transmitting antenna 12 via the antenna sharing equipment in the first antenna unit 1.

According to the third embodiment, the present invention is applied to the radio base station apparatus having the diversity transmission function. Consequently, even when one of the radio units having the same function is damaged, not only can a receiving function in one sector be maintained but also a transmitting function, which is advantageous.

The antenna sharing equipment with the above structure may comprise an antenna switch. Further, the antenna sharing equipment can be applied to a radio base station apparatus having two or more sectors by using a diversity having two branches.

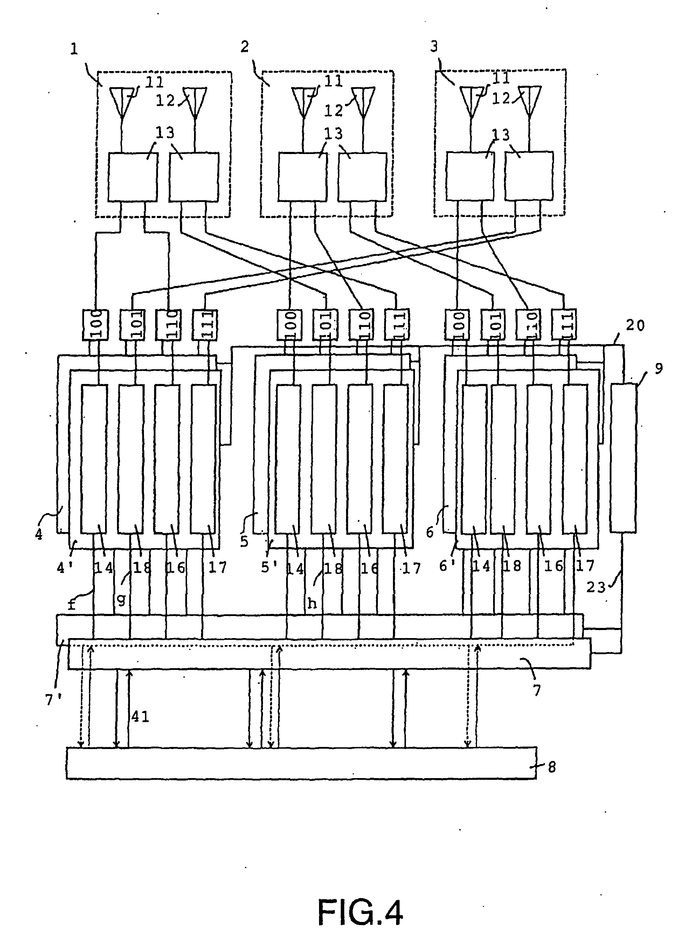

Finally, a fourth embodiment of the present invention will be described. According to the fourth embodiment, the transmitting system according to the third embodiment is further improved. Fig. 4 shows the structure of a radio base station apparatus according to the fourth embodiment. According to the fourth embodiment, the first radio unit 4, the second radio unit 5, and the third radio unit 6 are the same as those according to the third embodiment. That is, each of the first to third radio units 4 to 6 comprises a first transmitting unit 4, a second transmitting unit 18, a first receiving unit 15, and a second receiving unit 16. A first antenna unit 1, a second antenna unit 2, and a third antenna unit 3 have the same structure as those according to the third embodiment. Further, two receiving and transmitting antennas 11 and 12 in each of the first to third antenna units 1 to 3 are connected to antenna sharing equipment 13. However, the following points are different from the structure of the radio base station apparatus according to the third embodiment.

That is to way, according to the fourth embodiment, although the two receiving and transmitting antennas 11 and 12 in each of the first to third antenna units 1 to 3 are connected to the antenna sharing equipment 13, as mentioned above, the antenna sharing equipment 13 is connected to one of the first and second receiving units, or one of the first and second transmitting units in each of the first to third radio units 4 to 6, via a mixer or a divider. The first to third antenna units 1 to 3 and the first to third radio units 4 to 6 have the same structures as those according to the third embodiment. As a consequence, only the first antenna unit 1 and the first radio unit 4 are described in detail.

Referring to Fig. 4, the first antenna unit 1 comprises the receiving and transmitting antennas 11 and 12 and the antenna sharing equipment. The receiving and transmitting antenna unit 11 in the first antenna unit 1 is connected to the first transmitting unit and the first receiving unit in the first radio unit via the antenna sharing equipment. However, since the multicarrier-type FDD system is adopted, the receiving and transmitting antenna unit 11 in the first antenna unit 1 is connected to the first transmitting unit in the first radio unit via the antenna sharing equipment 13 and the first mixer 100. A first divider 110 is provided at the former-stage of a connected portion at which the receiving and transmitting antenna 11 in the first antenna unit 1 and the first receiving unit in the first radio unit, via the antenna sharing equipment. The first mixer 100 and the first divider 110 are connected to a plurality of first radio units 4, 4', ..., corresponding to the number of carriers. The plurality of first radio units 4, 4', ... are connected to first to N-th (where N is an integer and is equal to 2 or more) baseband signal processing units 7, 7', .... As mentioned above, according to the fourth embodiment, the number of radio units and the number of baseband signal processing units are determined in accordance with the number of carriers. The other structure is the same as that according to the third embodiment.

In the case of a fault of the first radio unit 4, which is connected to a multicarrier-type first baseband signal processing unit according to the fourth embodiment, the control unit 9 detects the fault signal 20 in the first radio unit 4 and notifies the first baseband signal processing unit 7 of the fault information 22. The control unit 9 sets transmission baseband signals that are outputted to the first and second transmitting units 18 in the first radio unit 4, connected to the first baseband signal processing unit 7, to invalid. Therefore, the transmission data 41 in the first sector is converted into the radio transmission signal in the second transmitting unit 18 in the second radio unit 5 connected to the first baseband signal processing unit 7. Thereafter, the converted signal is outputted to the receiving and transmitting antenna unit 12 via the second mixer 101 and the antenna sharing equipment 13 in the first antenna unit 1.

As mentioned above, since the present invention is applied to the radio base station apparatus having the diversity transmission function according to the fourth embodiment, even if one of the (single-carrier)-type first to third radio units is damaged, not only can a receiving function be maintained in one sector but also a transmitting function, which is advantageous.

### Industrial Applicability

In the present invention, the following advantages, that is, industrial applicability, are obtained.

First, diversity reception through two receiving units forming a radio unit is used. It is possible to prevent a receiving function from being interrupted in a sector by connecting two receiving units to antennas in different sectors, even if the radio unit is damaged.

Secondly, a back-up radio unit as a functional unit, a switching function of a currently used radio unit and the back-up radio unit, and high-frequency cable wiring for connecting the functional units become unnecessary as measures against faults in the radio unit. A complicated structure of the radio unit is made simple.

Thirdly, since neither a switching function nor a signal branch function is provided between a sector antenna and a receiving unit, the sensitivity of the receiving unit can be improved.
Finally, since the transmission power of a terminal can be reduced, the battery life of the terminal can be prolonged.

## Claims

1. A radio base station apparatus, comprising a mobile communication radio base station having a diversity reception function, said radio base station comprising a plurality of radio units, each of said plurality of radio units comprising a receiving unit in one sector, which is connected to an antenna in another sector.

2. A radio base station apparatus according to Claim 1, wherein said mobile communication radio base station further comprises:
a control unit for detecting fault information of said plurality of radio units; and
a baseband signal processing unit for specifying the radio unit which is damaged, based on a signal from said control unit, and for stopping a received signal from the receiving unit in said damaged radio unit.

3. A radio base station apparatus according to Claim 1 or 2, wherein said radio unit comprises a plurality of transmitting units.

4. A radio base station apparatus according to any one of Claims 1 to 3, wherein said receiving unit in the one sector is connected to said antenna in the other sector via antenna sharing equipment.

5. A radio base station apparatus according to Claim 4, wherein said receiving unit and said antenna, which are connected via said antenna sharing equipment, are further connected via a divider.

6. A radio base station apparatus according to any one of Claims 1 to 5, wherein said transmitting unit is connected to the antenna via a mixer and antenna sharing equipment.

7. A radio base station apparatus according to Claim 5 or 6, further comprising a plurality of the baseband signal processing units.

8. A method for preventing a radio function from being interrupted when a communication fault is caused in a mobile communication radio base station having a diversity reception function, said method comprising the steps of:
detecting a fault signal from a functional unit for covering one of a plurality of sectors;
transmitting a fault notifying signal to a baseband signal processing unit based on the detected fault signal; and
invalidating an output signal from a receiving unit in said functional unit in which the fault is caused based on said fault notifying signal.

9. A method for preventing a radio function from being interrupted when a communication fault is caused in a mobile communication radio base station having a diversity reception function, said method comprising the steps of:
detecting a fault signal from a multicarrier-type functional unit for covering one of a plurality of sectors;
transmitting a fault notifying signal to a baseband signal processing unit based on said detected fault signal; and
invalidating an output signal from a receiving unit in said functional unit in which the fault is caused, based on said fault notifying signal.
